# EUROPÄISCHE PATENTSCHRIFT

(11) **EP 4 185 769 B1**
(45) Veröffentlichungstag und Bekanntmachung des Hinweises auf die Patenterteilung: **17.07.2024**
(21) Anmeldenummer: 22734645.9
(22) Anmeldetag: 27.06.2022
(51) Int. Cl.: F03D 3/00, F03D 3/04, F03D 3/06

(54) **ROTOR FÜR EINE WINDKRAFTANLAGE UND VERFAHREN ZUM BETREIBEN EINER WINDKRAFTANLAGE**
ROTOR FOR A WIND TURBINE AND METHOD FOR OPERATING A WIND TURBINE
ROTOR POUR UNE ÉOLIENNE ET PROCÉDÉ DE FONCTIONNEMENT D'UNE ÉOLIENNE

(30) Priorität: 30.06.2021 EP 21182852
(43) Veröffentlichungstag der Anmeldung: 31.05.2023
(73) Patentinhaber: LCG Energy Holding BV, 6422 RM Heerlen (NL)
(72) Erfinder: OPITZ, Michael, 6422 RM Heerlen (NL)
(74) Vertreter: Ramrath, Lukas
(86) Internationale Anmeldenummer: PCT/EP2022/067547
(87) Internationale Veröffentlichungsnummer: WO 2023/274946

(56) Entgegenhaltungen:
- US-A1- 2009 045 632
- US-A1- 2010 219 643
- US-A1- 2019 293 051

## Beschreibung

Die Erfindung betrifft einen Rotor für eine Windkraftanlage und Verfahren zum Betreiben einer Windkraftanlage.

Windkraftanlagen zur Stromerzeugung sind dem Fachmann bekannt. Eine solche Anlage wandelt die (Bewegungs-)Energie des Windes in elektrische Energie um. Eine Windkraftanlage umfasst in der Regel einen Rotor, der vom Wind angeströmt wird, und einen mit dem Rotor gekoppelten Generator, der die durch den Wind verursachte (Dreh)Bewegung des Rotors in elektrische Energie umwandelt. Diese Energie kann dann in ein Stromnetz oder in eine Energiespeichereinrichtung eingespeist werden.

Bekannt sind Windkraftanlagen mit einer horizontal orientierten Rotationsachse des Rotors wie z.B. bei Windkraftanlagen mit einem so genannten Auftriebsläufer. Auch bekannt sind jedoch Windkraftanlagen mit Rotoren, deren Rotationsachse vertikal orientiert ist, beispielsweise der so genannte Savonius-Rotor. Solche Windkraftanlagen können kompakt ausgebildet werden und insbesondere auch auf Gebäudedächern montiert werden, um Strom zu erzeugen.

Auf der Webseite "http://www.wind-of-change.org/index.php/technik.html", abgerufen am 29.06.2021, ist eine Helix-Windturbine offenbart, bestehend aus zwei an einer vertikalen Rotorachse angebrachten waagerechten Linsenscheiben, zwischen denen zwei oder mehr halbkreisförmige gebogene Schaufeln senkrecht stehend montiert sind. Ferner offenbart ist, dass die Windkraftanlage eine Helix-Struktur aufweist.

Die US 2010/219643 A1 offenbart einen windbetriebenen elektrischen Stromgenerator mit vertikaler Achse und photovoltaischer Kraft-Wärme-Kopplung.

Die US 11 149 710 B2 offenbart einen Windturbinenrotor.

Die US 2009/045632 A1 offenbart eine Strömungsenergieanlage, insbesondere Windenergieanlage, mit mindestens einem um eine Achse rotierenden Rotor mit Rotorblättern.

Es stellt sich das technische Problem, einen Rotor für eine Windkraftanlage und Verfahren zum Betreiben einer Windkraftanlage zu schaffen, die bei verschiedenen Windstärken jeweils einen möglichsten hohen Energieertrag ermöglicht, wobei also die von der Windkraftanlage erzeugte Energie möglichst hoch ist.

Die Lösung des technischen Problems ergibt sich durch die Gegenstände mit den Merkmalen der unabhängigen Ansprüche. Weitere vorteilhafte Ausgestaltungen der Erfindung ergeben sich durch die Unteransprüche.

Vorgeschlagen wird ein Rotor für eine Windkraftanlage. Der Rotor kann eine Rotationsachse aufweisen bzw. dem Rotor kann eine Rotationsachse zugeordnet sein. Die Rotationsachse ist vorzugweise eine in Vertikalrichtung orientierte Rotationsachse, wobei die Vertikalrichtung parallel zur Gravitationsrichtung orientiert ist. Die Gravitationsrichtung kann hierbei von oben nach unten orientiert sein. Richtungsangaben wie "oben", "unten", "über", "unter" können sich auf diese Gravitationsrichtung beziehen. Im Folgenden bezeichnet eine Rotorquerschnittsebene eine Ebene, die senkrecht zur Rotationsachse orientiert ist.

Der Rotor umfasst einen ersten und einen zweiten Flügelträger. Ein Flügelträger kann scheiben- oder tellerförmig ausgebildet sein. Ein Flügelträger kann insbesondere rotationssymmetrisch in Bezug auf die Rotationsachse ausgebildet sein.

Weiter umfasst der Rotor eine erste Menge von mindestens zwei Rotorflügeln, wobei die Rotorflügel der ersten Menge schaufelförmig ausgebildet sind und sich helixartig vom ersten zum zweiten Flügelträger erstrecken.

Erfindungsgemäß umfasst der Rotor mindestens einen weiteren Flügelträger und mindestens eine weitere Menge von mindestens zwei Rotorflügeln, wobei die Rotorflügel der weiteren Menge schaufelförmig ausgebildet sind und sich helixartig vom zweiten zum weiteren Flügelträger erstrecken. Die Rotorflügel der ersten und der weiteren Mengen können also jeweils helixförmig ausgebildet sein oder einen helixförmigen Verlauf aufweisen.

Der zweite Flügelträger kann hierbei entlang der Rotationsachse beabstandet vom ersten Flügelträger angeordnet sein, wobei der erste Flügelträger unter dem zweiten Flügelträger angeordnet ist. Der weitere Flügelträger kann hierbei entlang der der Rotationsachse beabstandet vom zweiten Flügelträger angeordnet sein, wobei der zweite Flügelträger unter dem weiteren Flügelträger angeordnet ist. Abstände zwischen den verschiedenen Flügelträgern entlang der Rotationsachse können hierbei gleich, aber auch verschieden voneinander sein.

Der erste Flügelträger kann auch als unterer Flügelträger, der zweite Flügelträger als mittlerer Flügelträger und der weitere Flügelträger als oberer Flügelträger bezeichnet werden.

Die Rotorflügel der ersten Menge können hierbei an dem ersten Flügelträger, insbesondere an einer Oberseite, und dem zweiten Flügelträger, insbesondere an einer Unterseite, befestigt sein. Die Rotorflügel der weiteren Menge können hierbei an dem zweiten Flügelträger, insbesondere an einer Oberseite, und dem weiteren Flügelträger, insbesondere einer Unterseite, befestigt sein.

Ein Radius eines Flügelträgers in einer Rotorquerschnittsebene kann größer sein als ein Radius eines Kreises mit minimalem Durchmesser, in dem alle Rotorflügel angeordnet sind. Der Radius dieses Kreises kann beispielsweise 500 mm betragen, wobei der Radius des Flügelträgers beispielsweise 503 mm betragen kann.

Dass ein Rotorflügel schaufelförmige ausgebildet ist, kann bedeuten, dass der Rotorflügel oder eine Anströmfläche des Rotorflügels in einer Rotorquerschnittsebene, die durch den Rotorflügel verläuft, einen gekrümmten, insbesondere einen kreisbogenförmigen oder ovalbogenförmigen, Verlauf aufweist. Insbesondere kann ein Rotorflügel eine konkav ausgebildete Anströmfläche aufweisen. Ein Mittelpunktswinkel eines solchen Verlaufs kann bis zu 180° (einschließlich) betragen. Die Länge einer Kreissehne oder Ovalsehne eines solchen Verlaufs kann in einem Bereich von 500 mm bis 600 mm liegen und insbesondere 551 mm betragen. Die maximale Höhe des Verlaufs über dieser Kreissehne in Radialrichtung kann in einem Bereich von 200 mm bis 250 mm liegen und insbesondere 224 mm betragen. Die schaufelförmige Ausbildung ermöglicht ein Anströmen durch den Wind. Insbesondere kann die schaufelförmige Ausbildung gemäß bekannten Ausbildungen von Rotorflügeln eines Savonius-Rotors erfolgen.

Dass sich die Rotorflügel helixartig zwischen zwei Flügelträgern erstrecken kann bedeuten, dass ein Referenzpunkt eines Rotorflügels in verschiedenen Rotorquerschnittsebenen zwischen den Flügelträgern auf einer helixförmigen Referenzlinie liegt, also auf einer Linie, die sich insbesondere mit konstanter Steigung um einen Mantel eines Zylinders windet. Ein Referenzpunkt in einer Rotorquerschnittsebene kann ein geometrischer Mittelpunkt, ein Querschnittsflächenschwerpunkt, ein Mittelpunkt des gekrümmten Verlaufs des Rotorflügels oder der Anströmfläche oder ein sonstiger Punkt mit einer vorbestimmten Relativanordnung zum Rotorflügel in dieser Rotorquerschnittsebene sein.

Weiter erfindungsgemäß ist die Anordnung aus Rotorflügeln der ersten Menge winkelversetzt zur Anordnung der Rotorflügel der weiteren Menge angeordnet. Dies kann bedeuten, dass kein Rotorflügel der weiteren Menge die helixartige Erstreckung bzw. den helixartigen Verlauf eines Rotorflügels der ersten Menge fortsetzt.

Mit anderen Worten können in einem gemeinsamen Koordinatensystem bzw. in einer gemeinsamen Projektionsebene, die senkrecht zur Rotationsachse orientiert ist, die Befestigungsabschnitte der Rotorflügel der ersten Menge an dem ersten Flügelträger winkelversetzt zur den Befestigungsabschnitten der Rotorflügel der weiteren Menge am zweiten Flügelträger angeordnet sein. Alternativ ist es aber auch möglich, dass die Befestigungsabschnitte der Rotorflügel der ersten Menge an dem zweiten Flügelträger winkelversetzt zur den Befestigungsabschnitten der Rotorflügel der weiteren Menge am zweiten Flügelträger angeordnet sind. Der Befestigungsabschnitt kann den mit dem Rotorträger verbundenen Abschnitt eines Rotorflügels bezeichnen, also einen Endabschnitt. Der Befestigungsabschnitt kann hierbei insbesondere in einer Ebene liegen, die senkrecht zur Rotationsachse orientiert ist. Der Winkel dieses Winkelversatzes kann hierbei jedoch verschieden vom Winkelversatz zwischen den verschiedenen Befestigungsabschnitten der Rotorflügel der ersten Menge an dem ersten Flügelträger bzw. an dem zweiten Flügelträger sein. Der Winkel dieses Winkelversatzes kann insbesondere 360°/n betragen.

Ein Winkel zwischen den Befestigungsabschnitten der Rotorflügel verschiedener Mengen kann insbesondere ein Winkel zwischen einer ersten Linie und einer weiteren Linie in einer gemeinsamen Projektionsebene sein, wobei diese senkrecht zur Rotationsachse orientiert ist, wobei die erste Linie im Befestigungsabschnitt eines Rotorflügels der ersten Menge durch einen Referenzpunkt dieses Rotorflügels und die Rotationsachse verläuft, wobei die weitere Linie im Befestigungsabschnitt eines Rotorflügels der weiteren Menge durch einen, insbesondere gleichartigen, Referenzpunkt dieses Rotorflügels und die Rotationsachse verläuft. Der Rotorflügel der weiteren Menge kann insbesondere der zu einem betrachteten Rotorflügel der ersten Menge in mathematisch positiver oder negativer Drehrichtung um die Rotationsachse benachbarter Rotorflügel sein. Mit anderen Worten kann aus der Menge von Linien, die die Referenzpunkte der Rotorflügel der weiteren Menge in der gemeinsamen Projektionsebene mit der Rotationsasche verbinden, die weitere Linie als die Linie gewählt werden, die in der gemeinsamen Projektionsebene in Umfangsrichtung benachbart zur ersten Linie angeordnet ist.

Der Winkel des Winkelversatzes zwischen der Anordnung aus Rotorflügeln der ersten Menge und der Anordnung der Rotorflügel der weiteren Menge ist vorzugsweise größer als Null und kleiner als 360°/n, wobei n die Anzahl der Rotorflügel in einer Menge bezeichnet. Besonders bevorzugt beträgt der Winkel des Winkelversatzes 360°/2xn, also im Fall von 3 Rotationsflügeln pro Menge 60°.

Simulationen und Versuche haben ergeben, dass der Versatz einen Turboeffekt bewirkt, da im Vergleich einer Ausbildung ohne Versatz mehr Rotorflügel gleichzeitig durch den Wind angeströmt werden können. Der Turboeffekt bewirkt einen erhöhten Energieertrag bei gleicher Anströmgeschwindigkeit im Vergleich zu einer Ausbildung ohne Versatz. Somit ergibt sich also in vorteilhafter Weise ein Rotor, der einen Energieertrag erhöht.

In einer weiteren Ausführungsform umfasst die die erste Menge und/oder die weitere Menge genau drei Rotorflügel. Versuche und Simulationen haben ergeben, dass hierdurch eine besonders hoher Energieertrag erzielt werden kann.

In einer weiteren Ausführungsform ist/sind der mindestens eine Flügelträger und/oder mindestens eine Rotorflügel aus Aluminium oder aus Kunststoff ausgebildet. Bei einer Ausbildung aus Aluminium ergibt sich in vorteilhafter Weise eine sehr stabile Ausbildung. Bei einer Ausbildung aus Kunststoff kann in vorteilhafter Weise ein Gewicht des Rotors gering gehalten werden, was insbesondere für eine Gebäudedachmontage vorteilhaft ist. Im Fall einer Ausbildung aus Kunststoff kann insbesondere ein Spritzgußverfahren zur Herstellung genutzt werden.

In einer weiteren Ausführungsform schneidet eine helixartige Referenzlinie eines Rotorflügels eine Referenzebene, die senkrecht zu einer Rotationsachse des Rotors orientiert ist, mit einem Winkel aus einem Winkelbereich von 64° (einschließlich) bis 84° (einschließlich), vorzugsweise mit einem Winkel von 74°. Versuche und Simulationen haben ergeben, dass hierdurch ein besonders hoher Energieertrag erzielt werden kann.

In einer weiteren Ausführungsform umfasst der Rotor ein Gehäuse, wobei die Flügelträger und die Rotorflügel in einem Innenvolumen des Gehäuses angeordnet sind. Das Gehäuse bildet also ein Gehäuse für einen drehbaren Teil des Rotors, der die Flügelträger und die Rotorflügel umfasst. Der Rotor kann also in diesem Fall den drehbaren Teil und das Gehäuse, welches insbesondere ortsfest angeordnet ist, umfassen. Das Gehäuse kann insbesondere einen Gehäuseboden, ein Gehäusedach und Seitenwände umfassen, die ein Innenvolumen umfassen. Das Gehäuse kann aus Kunststoff oder Aluminium ausgebildet sein. Bei einer Ausbildung aus Aluminium ergibt sich in vorteilhafter Weise eine sehr stabile Ausbildung. Bei einer Ausbildung aus Kunststoff kann in vorteilhafter Weise ein Gewicht des Rotors gering gehalten werden, was insbesondere für eine Gebäudedachmontage vorteilhaft ist. Im Fall einer Ausbildung aus Kunststoff kann insbesondere ein Spritzgußverfahren zur Herstellung des Gehäuses genutzt werden.

Das Gehäuse kann einen Lufteinströmungsabschnitt oder eine Lufteinströmungsöffnung aufweisen oder ausbilden, insbesondere im Bereich einer Seitenwand. Das Gehäuse kann auch einen Luftausströmungsabschnitt oder eine Luftausströmungsöffnung aufweisen oder ausbilden, insbesondere im Bereich einer weiteren Seitenwand. Bei einem bestimmungsgemäßen Betrieb kann Luft hierbei in das Gehäuse einströmen, den im Gehäuse angeordneten Rotor anströmen und hierdurch in Rotation versetzen und dann aus dem Gehäuse ausströmen.

Die Gesamtheit aus Flügelträgern und Rotorflügeln kann hierbei in dem Gehäuse gelagert sein, insbesondere drehbar, weiter insbesondere an dem Gehäuseboden und/oder dem Gehäusedach.

Das Gehäuse ermöglicht in vorteilhafter Weise eine Luftführung derart, dass die Rotorflügel verbessert angeströmt werden und somit ein Energieertrag weiter erhöht werden kann.

Ein Rotor für eine Windkraftanlage mit einem Gehäuse, wobei das Gehäuse gemäß einer der in dieser Offenbarung beschriebenen Ausführungsformen ausgebildet ist, kann eine unabhängige Erfindung darstellen, die insbesondere unabhängig von dem Merkmal ist, dass die Anordnung aus Rotorflügeln der weiteren Menge winkelversetzt zur Anordnung der Rotorflügel der ersten Menge angeordnet ist. Somit wird auch ein Rotor für eine Windkraftanlage beschrieben, umfassend einen ersten und einen zweiten Flügelträger und mindestens zwei Rotorflügel, wobei die Rotorflügel der ersten Menge schaufelförmig ausgebildet sind und sich, insbesondere helixartig, vom ersten zum zweiten Flügelträger erstrecken. Die Flügelträger und die Rotorflügel bilden einen drehbaren Teil des Rotors. Ein solcher Rotor umfasst ein Gehäuse für diesen drehbaren Teil, wobei die Flügelträger und die Rotorflügel in einem Innenvolumen des Gehäuses angeordnet sind. Weiter kann ein solcher Rotor, insbesondere der drehbare Teil, mindestens einen weiteren Flügelträger und mindestens eine weitere Menge von mindestens zwei Rotorflügeln umfasst, wobei die Rotorflügel der weiteren Menge schaufelförmig ausgebildet sind und sich, insbesondere helixartig, vom zweiten zum weiteren Flügelträger erstrecken.

In einer weiteren Ausführungsform bildet das Gehäuse einen Lufteinströmungsabschnitt aus, z.B. an einer Vorderseite, wobei der Lufteinströmungsabschnitt trichterförmig ausgebildet ist.

Die trichterförmige Ausbildung kann bedeuten, dass sich der Lufteinströmungsabschnitt in einer Rotorquerschnittsebene entlang der Strömungsrichtung verjüngt. Insbesondere kann der Lufteinströmungsabschnitt in der Rotorquerschnittsebene trapezförmig ausgebildet sein oder einen trapezförmigen Abschnitt umfassen, wobei die Grundseiten dieses Abschnitts senkrecht zur Strömungsrichtung orientiert sein können.

Hierdurch wird eine Anströmung der Rotorflügel derart ermöglicht, dass diese mit einer hohen Beschleunigung beschleunigt werden, was wiederum in vorteilhafter Weise einen Energieertrag einer Windkraftanlage mit diesem Rotor erhöht. Insbesondere kann durch die trichterförmige Ausbildung ein hoher Anströmungsdruck auf die Rotorflügel erzielt werden.

In einer weiteren Ausführungsform ist ein Öffnungswinkel des Lufteinströmungsabschnitts ein Winkel aus einem Winkelbereich von 66° (einschließlich) bis 86° (einschließlich), vorzugsweise ein Winkel aus einem Winkelbereich von 68,4° (einschließlich) bis 83,6° (einschließlich), besonders vorzugsweise ein Winkel von 76°. Versuche und Simulationen haben ergeben, dass hierdurch ein besonders hoher Energieertrag erzielt werden kann.

In einer weiteren Ausführungsform ist ein Winkel zwischen einer ersten Seitenwand und einer weiteren Seitenwand, die den Lufteinströmungsabschnitt begrenzen und senkrecht zu einer Rotationsquerschnittsebene orientiert sind, ein Winkel aus einem Winkelbereich von 66° (einschließlich) bis 86° (einschließlich), vorzugsweise ein Winkel aus einem Winkelbereich von 68,4° (einschließlich) bis 83,6° (einschließlich), besonders vorzugsweise ein Winkel von 76°. Versuche und Simulationen haben ergeben, dass hierdurch ein besonders hoher Energieertrag erzielt werden kann.

In einer weiteren Ausführungsform bildet in einer Querschnittsebene, die senkrecht zur Rotationsachse des Rotors orientiert ist, eine erste Seitenwand, die den Lufteinströmungsabschnitt begrenzt und senkrecht zur Querschnittsebene orientiert ist, zumindest einen Abschnitt eines ersten Schenkels eines Trapezes oder eines trapezförmigen Abschnitts des Lufteinströmungsabschnitts und schließt mit einer Basis dieses Trapezes einen Winkel aus einem Bereich von 70° (einschließlich) bis 84° (einschließlich), vorzugsweise einen Winkel von 77°, ein, wobei eine weitere Seitenwand, die den Lufteinströmungsabschnitt begrenzt und senkrecht zur Querschnittsebene orientiert ist, zumindest einen Abschnitt eines weiteren Schenkels des Trapezes bildet und mit der Basis dieses Trapezes einen Winkel von aus einem Bereich von 20° (einschließlich) bis 34° (einschließlich), vorzugsweise einen Winkel von 27°, einschließt. Versuche und Simulationen haben ergeben, dass hierdurch ein besonders hoher Energieertrag erzielt werden kann.

In einer weiteren Ausführungsform bildet das Gehäuse einen Luftausströmungsabschnitt aus, insbesondere an einer Rückseite, wobei der Luftausströmungsabschnitt trichterförmig ausgebildet ist. Ein Öffnungswinkel des Luftausströmungsabschnitts kann hierbei kleiner als oder gleich 45° sein. Der Lufteinströmabschnitt und der Luftausströmabschnitt können in Bezug auf eine Mittellinie, die die Rotationsachse senkrecht schneidet, versetzt angeordnet sein.

In einer weiteren Ausführungsform liegt ein Anteil einer Gehäuserückseitenfläche an der Gesamtheit aus Gehäuserückseitenfläche und Luftausströmfläche höchstens zwischen 20% (einschließlich) und 26% (einschließlich), vorzugsweise beträgt er höchstens 23%. Hierdurch ergibt sich, insbesondere in Zusammenhang mit dem wie beschrieben ausgebildeten Lufteinströmabschnitt, ein Innendruck im Gehäuse derart, dass ein hoher Anströmdruck auf die Rotorflügel aufgebaut und aufrechterhalten werden kann. Dies wiederum ermöglicht in vorteilhafter Weise das Erzielen eines hohen Energieertrags.

In einer weiteren Ausführungsform ist der erste Flügelträger zumindest teilweise in einer Ausnehmung Gehäuseboden des Gehäuses angeordnet. Alternativ oder kumulativ ist der weitere Flügelträger zumindest teilweise in einer Ausnehmung im Bereich eines Gehäusedeckels des Gehäuses angeordnet. Dies ermöglicht in vorteilhafter Weise eine verbesserte Anströmung der Rotorflügel sowie eine vom Bauraum her kompaktere Ausbildung des Rotors.

In einer weiteren Ausführungsform weist der erste Flügelträger eine Ausnehmung zur Aufnahme und Befestigung einer Generatorwelle auf oder bildet diese aus. Alternativ oder kumulativ weist ein Gehäuseboden eine verstärkte Durchgangsöffnung zur Aufnahme der Generatorwelle aufweist oder bildet diese aus. Eine verstärkte Durchgangsöffnung kann insbesondere eine Öffnung sein, die von einem verstärkten Abschnitt des Gehäusebodens umgegeben wird. In einem verstärkten Abschnitt kann eine Dicke des Gehäuseboden, welche z.B. eine Dimension parallel zur Rotationsachse sein kann, im Vergleich zu unverstärkten Abschnitten des Gehäusebodens erhöht sein. Hierdurch ergibt sich in vorteilhafter Weise eine zuverlässige Befestigung einer Welle eines Generators und/oder eine zuverlässige Lagerung der Welle am Gehäuse.

In einer weiteren Ausführungsform weist der weitere Flügelträger ein Lagerelement zur Lagerung an einem Oberteil des Gehäuses auf oder bildet dieses aus. Das Lagerelement kann insbesondere als Vorsprung, insbesondere als zylinderförmiger Vorsprung, an einer Oberseite des weiteren Flügelträgers ausgebildet oder angeordnet sein.

Alternativ oder kumulativ weist das Oberteil des Gehäuses eine verstärkte Durchgangsöffnung zur Aufnahme des Lagerelements auf oder bildet diese aus. Eine verstärkte Durchgangsöffnung kann insbesondere eine Öffnung sein, die von einem verstärkten Abschnitt des Gehäusedeckels umgegeben wird. In einem verstärkten Abschnitt kann eine Dicke des Gehäusedeckels, welche z.B. eine Dimension parallel zur Rotationsachse sein kann, im Vergleich zu unverstärkten Abschnitten des Gehäusedeckels erhöht sein. Hierdurch ergibt sich in vorteilhafter Weise eine zuverlässige Befestigung einer Welle eines Generators und/oder eine zuverlässige Lagerung der Welle am Gehäuse.

Weiter beschrieben wird eine Windturbine mit einem Rotor und einem Generator. Hierbei kann eine Welle des Generators mit dem Rotor verbunden sein, insbesondere drehfest. Insbesondere kann die Welle des Generators an einem Flügelträger befestigt sein, bevorzugt am ersten Flügelträger, insbesondere an einer Unterseite, oder aber auch am weiteren Flügelträger, insbesondere an einer Oberseite. Die Welle kann hierbei im Gehäuse gelagert sein, z.B. in/an dem Gehäuseboden, z.B. mittels einem geeigneten Kugel- oder Walzlager.

Der Generator oder das Gehäuse des Generators kann mit dem Gehäuse des Rotors verbunden sein, insbesondere verschraubt sein. Der Generator kann hierbei vorzugsweise unter dem Rotor angeordnet sein, also insbesondere unterhalb des ersten Flügelträgers.

Die vorgeschlagene Windturbine kann zur Erzeugung von Energie genutzt werden, wobei diese Energie beispielsweise zur Wärmeproduktion aber auch zur elektrischen Versorgung in einem Gebäude genutzt werden kann. Insbesondere kann die Windturbine zur Energieerzeugung für Privathaushalte genutzt werden. Z.B. kann die Energie in einer Speichereinrichtung gespeichert, zum Heizen, z.B. über einen Heizstab, benutzt, zum Betreiben einer Wärmepumpe genutzt, zum Aufladen eines Elektro- oder Hybridfahrzeugs genutzt, zur Versorgung von Verbrauchern, insbesondere Haushaltsgeräten wie z.B. einer Waschmaschine, genutzt oder in ein Versorgungsnetz eingespeist werden.

Die vorgeschlagene Windturbine ermöglicht in weiter vorteilhafter Weise eine sehr geräuscharme Energieerzeugung. Ferner ist sie wartungsarm und produziert in jeder Jahreszeit Energie. Sie kann eine geringe Höhe von 1.40 m aufweisen. Weiter kann die Windturbine auf einem Gebäudedach installiert werden. Die Windturbine ermöglicht in vorteilhafter Weise eine CO2-freie Energieerzeugung.

Die Windturbine kann weiter eine Energiespeichereinrichtung umfassen, die mit dem Generator verbunden ist und von diesem erzeugte elektrische Energie speichert. Stromverbraucher können über einen Wechselrichter, der ebenfalls Teil der Windturbine sein kann, mit der Energiespeichereinrichtung und/oder mit dem Generator verbunden werden. Eine Speicherkapazität der Energiespeichereinrichtung kann z.B. 5 kW oder 10 kW betragen.

Weiter vorgeschlagen wird ein Verfahren zum Betrieb eines Rotors nach einem der in dieser Offenbarung beschriebenen Ausführungen. Hierbei ist ein Generator mechanisch mit dem Rotor verbunden und der Rotor wird mit Luft angeströmt.

Die Erfindung wird anhand von Ausführungsbeispielen näher erläutert. Die Figuren zeigen:
- Fig. 1: eine schematische Seitenansicht eines erfindungsgemäßen Rotors,
- Fig. 2: eine schematische Vorderansicht einer Windturbine mit einem erfindungsgemäßen Rotor,
- Fig. 3: einen schematischen Längsschnitt durch ein Gehäuse einer Windturbine,
- Fig. 4: einen schematischen Querschnitt durch einen Rotor im Bereich der Anordnung der Rotorflügel der ersten Menge in einer Drehstellung des Rotors,
- Fig. 5: einen schematischen Querschnitt durch einen Rotor im Bereich der Anordnung der Rotorflügel der weiteren Menge in der in Fig. 4 dargestellten Drehstellung des Rotors,
- Fig. 6: eine schematische Ansicht einer gemeinsamen Projektionsebene,
- Fig. 7: einen schematischen Querschnitt durch ein Gehäuse des Rotors,
- Fig. 8: eine schematische Darstellung einer Lagerung eines ersten Flügelträgers am Gehäuse,
- Fig. 9: eine schematische Darstellung einer Lagerung eines weiteren Flügelträgers am Gehäuse.

Nachfolgend bezeichnen gleiche Bezugszeichen Elemente mit gleichen oder ähnlichen technischen Merkmalen.

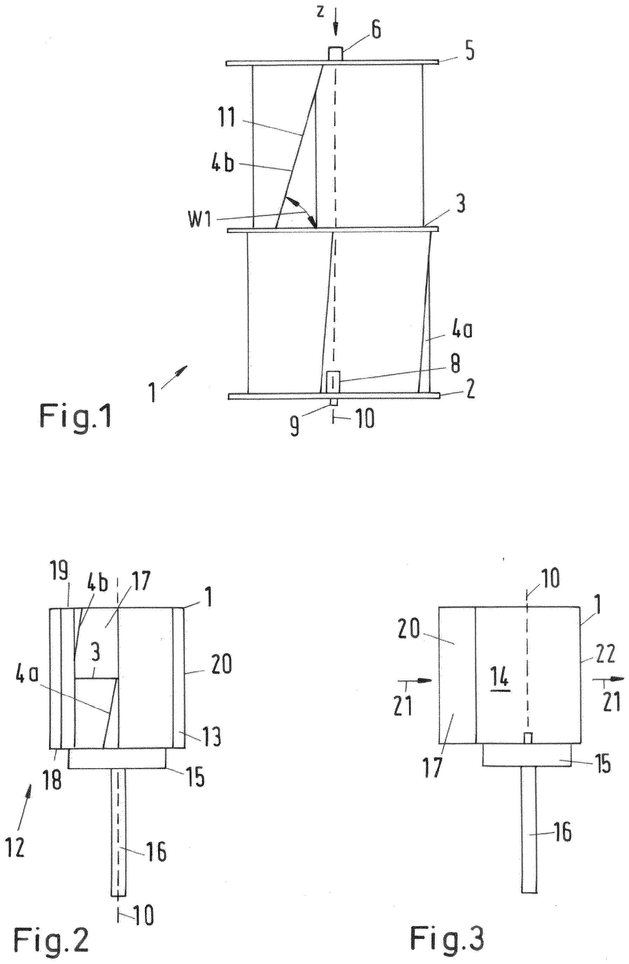

Fig. 1 zeigt eine schematische Seitenansicht eines erfindungsgemäßen Rotors 1. Der Rotor 1 umfasst einen ersten, unteren Flügelträger 2 und einen zweiten, mittleren Flügelträger 3 und eine erste Menge von mindestens zwei Rotorflügeln 4a, wobei die Rotorflügel 4a der ersten Menge schaufelförmig ausgebildet sind und sich helixartig vom ersten zum zweiten Flügelträger 2, 3 erstrecken.

Der Rotor 1 umfasst weiter einen weiteren (dritten), oberen Flügelträger 5 und eine weitere Menge von mindestens zwei Rotorflügeln 4b, wobei die Rotorflügel 4b der weiteren Menge schaufelförmig ausgebildet sind und sich helixartig vom zweiten zum dritten Flügelträger 3, 5 erstrecken.

Die Flügelträger 2, 3, 5 sind tellerförmig bzw. kreisplattenförmig ausgebildet. Weiter dargestellt ist ein Lagerungselement 6, welches als zylinderförmiger Vorsprung an einer Oberseite des dritten Flügelträgers 5 ausgebildet ist. Dieses Lagerungselement 6 dient zur Lagerung der Gesamtheit aus Flügelträgern 2, 3, 5 und Rotorflügeln 4a, 4b im Gehäuse 7 (siehe Fig. 2). Weiter dargestellt ist ein Lagerungselement 6, welches als zylinderförmiger Vorsprung an einer Oberseite des dritten Flügelträgers 5 ausgebildet ist. Dieses Lagerungselement 6 dient zur Lagerung der Gesamtheit aus Flügelträgern 2, 3, 5 und Rotorflügeln 4a, 4b im Gehäuse 7 (siehe Fig. 2).

Ebenfalls dargestellt ist, dass der erste Flügelträger 2 eine Ausnehmung 8 zur Aufnahme und Befestigung einer Generatorwelle 9 aufweist oder ausbildet, wobei diese Ausnehmung 8 schematisiert dargestellt ist.

Weiter dargestellt ist eine Rotationsachse 10 des Rotors 1 und eine Vertikalrichtung z, die parallel zu und in Richtung einer Gewichtskraft orientiert sein kann, insbesondere in einer bestimmungsgemäßen Anordnung des Rotors 1.

Weiter dargestellt ist, dass ein helixartige Referenzlinie 11 eines Rotorflügels 4b eine Referenzebene, die senkrecht zu der Rotationsachse 10 des Rotors 1 orientiert ist, mit einem Winkel W1 von 74° schneidet. Mit anderen Worten kann die Steigung der helixartigen oder helixförmigen Referenzlinie 11 74° betragen.

Ein Abstand zwischen dem ersten Flügelträger 2 und dem zweiten Flügelträger 3 entlang der Rotationsachse 10 (mit anderen Worten eine Höhe der Anordnung von Rotorflügeln 4a der ersten Menge) kann 700 mm betragen. Ein Abstand zwischen dem zweiten Flügelträger 3 und dem dritten Flügelträger 5 entlang der Rotationsachse 10 (mit anderen Worten eine Höhe der Anordnung von Rotorflügeln 4b der weiteren Menge) kann ebenfalls 700 mm betragen.

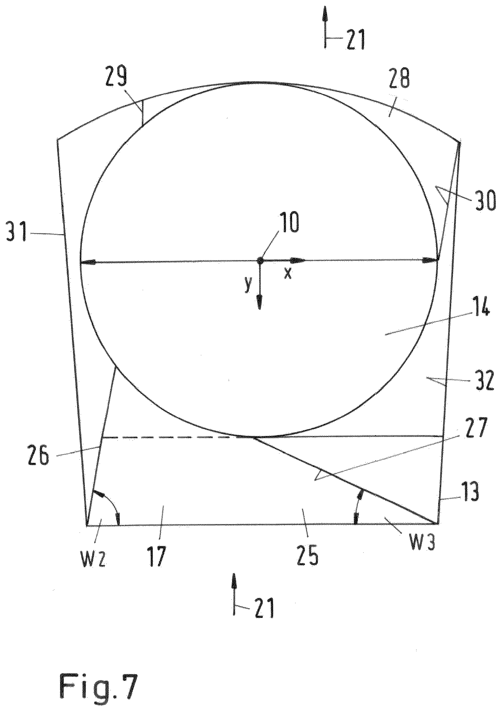

Fig. 2 zeigt eine schematische Vorderansicht einer Windturbine 12 mit einem erfindungsgemäßen Rotor 1. Der Rotor 1 umfasst hierbei noch ein Gehäuse 13, wobei die Gesamtheit aus Flügelträgern 2, 3, 5 und Rotorflügeln 4a, 4b im Innenvolumen 14 (siehe Fig. 7) des Gehäuses 13 angeordnet ist. Dargestellt ist ein Generator 15, der unter dem Gehäuse 13, insbesondere auch unter dem ersten Flügelträger 2, angeordnet ist. Der Generator 15 ist über eine Welle 16 mit dem Rotor 1, insbesondere dem ersten Flügelträger 2, drehfest verbunden. Die Welle 16 kann in einem Fundament verankert sein, insbesondere drehbar gelagert verankert sein. Das Fundament kann z.B. durch ein Gehäusedach ausgebildet sein.

Das Gehäuse 13 umfasst einen Gehäuseboden 18 und einen Gehäusedeckel 19 und Seitenwände 20, die das Innenvolumen 14 umfassen. Dargestellt ist ein Lufteinströmungsabschnitt 17 des Gehäuses 13, durch eine Luft zur Anströmung der Rotorflügel 4a, 4b in das Gehäuse 13 einströmt. Der Lufteinströmungsabschnitt 17 ist hierbei im Bereich einer Vorderseite des Gehäuses 13 angeordnet. Die Vorderseite kann insbesondere eine Seite bezeichnen, die vom Wind beim bestimmungsgemäßen Betrieb angeströmt wird.

Fig. 3 zeigt einen schematischen Längsschnitt durch ein Gehäuse 13 einer Windturbine 12. Eine Strömungsrichtung eines Luftstroms durch das Gehäuse 13 ist schematisch durch Pfeile 21 dargestellt. Luft strömt hierbei durch einen Lufteinströmabschnitt 17 in das Gehäuse 13 ein und durch einen Luftausströmabschnitt 22 aus dem Gehäuse 13 aus.

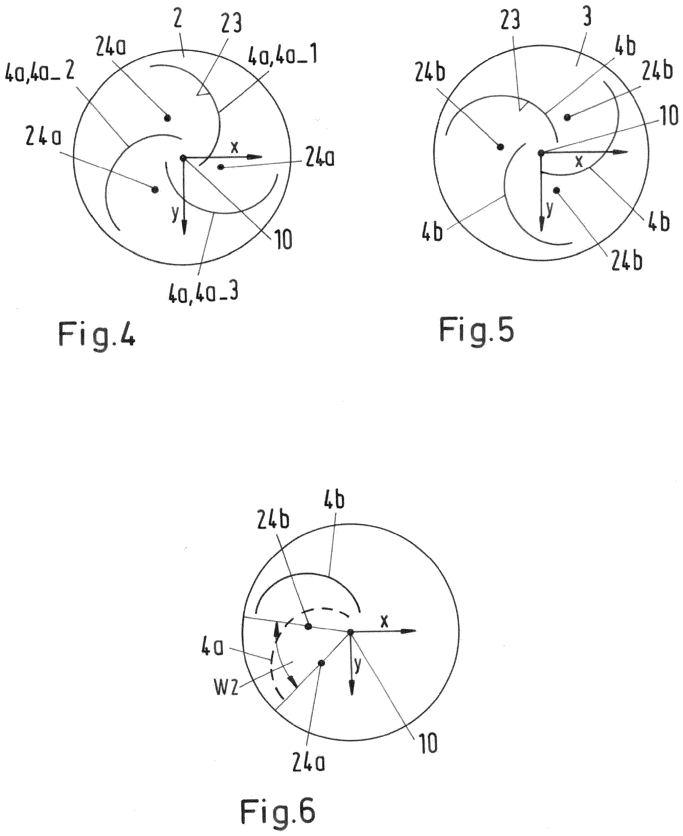

Fig. 4 zeigt einen schematischen Querschnitt durch einen Rotor 1 im Bereich der Anordnung der Rotorflügel 4a der ersten Menge in einer Drehstellung des Rotors 1. In der dargestellten Querschnittsebene sind Befestigungsabschnitte der Rotorflügel 4a der ersten Menge angeordnet, in denen diese Rotorflügel 4a an der Oberseite des ersten Flügelträger 2 befestigt sind.

Dargestellt ist ein Referenzkoordinatensystem mit einer Längsachse x und einer Querachse y. Die Längsachse x ist senkrecht zur Querachse y orientiert, wobei beide Achsen x, y jeweils senkrecht zur Gravitationsachse z orientiert sein. Orientierung der Achsen x, y sind durch Pfeile repräsentiert. Ein Mittelpunkt des Referenzkoordinatensystems ist in einem Schnittpunkt der Rotationsachse 10 mit der Querschnittsebene angeordnet.

Dargestellt ist, dass die Rotorflügel 4a schaufelförmig ausgebildet sind. In der dargestellten Ausführungsform weisen die Rotorflügel 4a bzw. eine von diesen Rotorflügeln 4a ausgebildete konkav gekrümmte Anströmfläche 23 einen halbkreisförmigen Verlauf in der Querschnittsebene auf. Für jeden der Rotorflügel 4a ist hierbei ein Mittelpunkt 24a dieses halbkreisförmigen Verlaufs dargestellt. Linien, die diese Mittelpunkte 24a und die Rotationsachse 10 in dieser Querschnittsebene schneiden, sind mit einem Winkelversatz von 120° winkelversetzt zueinander angeordnet, d.h. eine Linie schließt einen Winkel von 120° mit der in mathematisch positiver oder negativer Drehrichtung um die Rotationsachse 10 benachbarten Linie ein.

In der dargestellte Drehstellung kann ein äußeres Ende eines ersten Rotorflügels 4a_1 in einem zweiten Quadranten des Koordinatensystems angeordnet sein und mit einem Längsabstand von 146 mm entlang der Längsachse x vom Mittelpunkt bzw. der Querachse y des Koordinatensystems beabstandet sein. Ein inneres Ende des ersten Rotorflügels 4a_1 kann in einem vierten Quadranten angeordnet sein und entlang der Längsachse x vom Mittelpunkt bzw. der Querachse y des Koordinatensystems mit einem Abstand von 77,5 mm und von einem inneren Ende eines dritten Rotorflügels 4a_3 mit einem Abstand von 155 mm beabstandet sein. Das innere Ende des ersten und des dritten Rotorflügels 4a_1, 4a_3 können hierbei entlang der Querachse auf der gleichen Höhe liegen.

Ein inneres Ende eines zweiten Rotorflügels 4a_2 kann auf der Querachse y im Bereich des Übergangs vom ersten zum zweiten Quadranten angeordnet sein und mit einem Querabstand von 103 mm entlang der Querachse y vom Mittelpunkt bzw. der Längsachse x des Koordinatensystems beabstandet sein. Ein äußeres Ende des zweiten Rotorflügels 4a_2 kann im dritten Quadranten angeordnet sein und mit einem Querabstand von 345 mm entlang der Querachse y vom Mittelpunkt bzw. der Längsachse x des Koordinatensystems beabstandet sein. Ein inneres Ende eines dritten Rotorflügels 4a_3 kann im dritten Quadranten angeordnet sein und mit einem Querabstand von 52 mm entlang der Querachse y vom Mittelpunkt bzw. der Längsachse x des Koordinatensystems beabstandet sein. Ein äußeres Ende des dritten Rotorflügels 4a_3 kann im vierten Quadranten angeordnet sein und mit einem Querabstand von 95 mm entlang der Querachse y vom Mittelpunkt bzw. der Längsachse x des Koordinatensystems beabstandet sein. Die angegebenen Abstände sind hierbei bevorzugte Abstände. Allerdings ist es auch möglich, die Rotorflügel mit davon verschiedenen Abständen anzuordnen, insbesondere mit Abständen aus einem Toleranzbereich mit einer Breite von 20% des angeführten Abstands, dessen zentraler Wert der angeführte Abstand ist. Insbesondere kann also der Abstand auch 90% des angeführten Abstands oder 110% des angeführten Abstands betragen oder aus einem Bereich dazwischen gewählt sein.

Ein Radius des ersten Flügelträgers kann hierbei 503 mm betragen. Ein minimaler Radius eines Kreises, der in der Querschnittsebene alle Rotorflügel 4a der ersten Menge einfasst kann 500 mm betragen.

Fig. 5 zeigt einen schematischen Querschnitt durch einen Rotor 1 im Bereich der Anordnung der Rotorflügel 4b der weiteren Menge in der in Fig. 4 dargestellten Drehstellung des Rotors 1. In der dargestellten Querschnittsebene sind Befestigungsabschnitte der Rotorflügel 4b der weiteren Menge angeordnet, in denen diese Rotorflügel 4b an der Oberseite des zweiten Flügelträger 3 befestigt sind.

Dargestellt ist das ebenfalls in Fig. 4 dargestellte Referenzkoordinatensystem mit der Längsachse x und der Querachse y. Entsprechend den Rotorflügeln 4a der ersten Menge sind auch die Rotorflügel 4b der weiteren Menge schaufelförmig ausgebildet. Für jeden der Rotorflügel 4b ist hierbei ein Mittelpunkt 24b des halbkreisförmigen Verlaufs des Rotorflügels 4b bzw. der Anströmfläche 23 dargestellt. Linien, die diese Mittelpunkte 24b und die Rotationsachse 10 in dieser Querschnittsebene schneiden, sind mit einem Winkelversatz von 120° winkelversetzt zueinander angeordnet, d.h. eine Linie schließt einen Winkel von 120° mit der in mathematisch positiver oder negativer Drehrichtung um die Rotationsachse 10 benachbarten Linie ein.

Aus der Zusammenschau von Fig. 4 und Fig. 5 ist ersichtlich, dass die Anordnung aus Rotorflügeln 4b der weiteren Menge winkelversetzt zur Anordnung der Rotorflügel 4a der weiteren Menge angeordnet ist, insbesondere mit einem Winkelversatz von 60°.

Fig. 6 zeigt eine schematische gemeinsame Projektionsebene, in die die in Fig. 4 und Fig. 5 dargestellten Rotorflügel 4a, 4b projiziert wurden, wobei die Projektionsebene senkrecht zur Rotationsachse 10 orientiert ist und der Übersichtlichkeit halber nur ein Rotorflügel 4a der ersten Menge und ein Rotorflügel 4b der weiteren Menge dargestellt ist. Durch eine Strichlinie dargestellt ist der in die gemeinsame Projektionsebene projizierter Rotorflügel 4a der ersten Menge und durch eine durchgezogene Linie dargestellt ist ein Rotorflügel 4b der weiteren Menge. Mit anderen Worten stellt Fig. 6 die Projektion des Rotorflügels 4a im Befestigungsabschnitt dieses Rotorflügels 4a an dem ersten Flügelträger 2 und die Projektion des Rotorflügels 4b im Befestigungsabschnitt dieses Rotorflügels 4b an dem zweiten Flügelträger 3 dar. Der Rotorflügel 4b der weiteren Menge ist insbesondere der zu einem betrachteten Rotorflügel 4a der ersten Menge in negativer Drehrichtung um die Rotationsachse 10 benachbarte Rotorflügel 4b.

Es ist erkennbar, dass der Befestigungsabschnitt des Rotorflügels 4a der ersten Menge an dem ersten Flügelträger 2 mit einem Winkelversatz von W2 winkelversetzt zu dem Befestigungsabschnitt des Rotorflügels 4b der weiteren Menge am zweiten Flügelträger 3 angeordnet ist, wobei der Winkelversatz W2 insbesondere 60° beträgt.

Dieser Winkel W2 zwischen den Befestigungsabschnitten der Rotorflügel 4a, 4b verschiedener Mengen ist der Winkel W2 zwischen einer ersten Linie und einer weiteren Linie in der gemeinsamen Projektionsebene, wobei die erste Linie im Befestigungsabschnitt des Rotorflügels 4a der ersten Menge durch den Mittelpunkt 24a des halbkreisförmigen Verlaufs dieses Rotorflügels 4a und die Rotationsachse 10 verläuft, wobei die weitere Linie im Befestigungsabschnitt des Rotorflügels 4b der weiteren Menge durch den Mittelpunkt des halbkreisförmigen Verlaufs dieses Rotorflügels 4b und die Rotationsachse 10 verläuft.

Es ist aber auch möglich, dass die Projektion des Rotorflügels 4a im Befestigungsabschnitt dieses Rotorflügels 4a an dem zweiten Flügelträger 3 und die Projektion des Rotorflügels 4b im Befestigungsabschnitt dieses Rotorflügels 4b an dem zweiten Flügelträger 3 mit einem Winkelversatz von W2 winkelversetzt zueinander angeordnet sind, wobei der Winkelversatz W2 insbesondere 60° beträgt.

Fig. 7 zeigt einen schematischen Querschnitt durch ein Gehäuse 13 des Rotors 1, wobei der drehbare Teil des Rotors 1 umfassend die Flügelträger 2, 3, 5 und die Rotorflügel 4a, 4b nicht dargestellt ist.

Die Querschnittsebene ist hierbei senkrecht zur Rotationsachse 10 des drehbaren Teils des Rotors 1 orientiert. Ersichtlich ist ein Innenvolumen 14 des Gehäuses 13, welches einen im Querschnitt kreisförmiges Aufnahmevolumen zur Anordnung des drehbaren Teils umfasst. Ein Radius dieses Aufnahmevolumens kann hierbei größer als ein (maximaler) Radius der Flügelträger 2, 3, 5 sein und beispielsweise 1004 mm betragen.

Weiter dargestellt ist ein Lufteinströmabschnitt 17, der trichterförmig ausgebildet ist und sich entlang der Strömungsrichtung 21 der Luft verjüngt. Der Lufteinströmabschnitt 17 ist insbesondere an der Vorderseite des Gehäuses 13 ausgebildet. Im dargestellten Querschnitt umfasst der Lufteinströmabschnitt 17 einen trapezförmigen Abschnitt 25. Der trapezförmige Abschnitt 25 ist insbesondere ein nicht gleichschenkliger, ein nicht rechtwinkliger und ein nicht symmetrischer trapezförmiger Abschnitt.

Ein Winkel W2, den ein erster Schenkel mit der Basis, also der längeren Grundseite, des Trapezes einschließt, beträgt vorzugsweise 77°, kann aber auch aus einem Bereich von 70° bis 84° gewählt werden. Ein Winkel W3, den ein zweiter Schenkel mit der Basis des Trapezes einschließt, beträgt vorzugsweise 27°, kann aber auch aus einem Bereich von 20° bis 34° gewählt werden. Der erste Schenkel des Trapezes wird in der Querschnittsebene von einer ersten Seitenwand 26 des Gehäuses 13 und der zweite Schenkel von einer zweiten Seitenwand 27 des Gehäuses 13 gebildet. Diese Seitenwände 26, 27 begrenzen den Lufteinströmungsabschnitt 17 und sind senkrecht zur dargestellten Querschnittsebene orientiert. Weiter wird der Lufteinströmungsabschnitt 17 von dem Gehäuseboden 18 und dem Gehäusedeckel 19 begrenzt. Der Winkel zwischen der ersten Seitenwand 26 und der zweiten Seitenwand 27 beträgt vorzugsweise 76°. Er kann aber auch aus einem Bereich von 66° bis 86° gewählt werden.

Die Basis des Trapezes kann senkrecht zu einer vorbestimmten bzw. vorgegebenen Hauptströmungsrichtung des Windes sein, wobei diese im dargestellten Ausführungsbeispiel parallel und entgegengesetzt zu einer Querachse y eines Referenzkoordinatensystems orientiert ist.

Weiter bildet das Gehäuse 13 an einer Rückseite einen Luftausströmungsabschnitt 28 aus, wobei der Luftausströmungsabschnitt 28 in der Querschnittsebene trichterförmig ausgebildet ist und sich entlang der Strömungsrichtung 21 der Luft verbreitert. Ein Öffnungswinkel des Luftausströmungsabschnitts 28 kann hierbei kleiner als oder gleich 45° sein.

Der Luftausströmungsabschnitt 28 wird hierbei von zwei Seitenwänden 29, 30 und dem Gehäuseboden 18 und dem Gehäusedeckel 19 begrenzt und bildet außenseitig eine Luftausströmfläche. Ein erste Seitenwand 29 ist entlang der Längsrichtung mit einem Maximalabstand von 291 mm von einer ersten Gehäuseaußenseitenwand 31 beabstandet.

Eine Breite des Gehäuses 13 an der Vorderseite entlang einer Längsachse x beträgt 1025 mm, die Breite des Gehäuses 13 an der Rückseite beträgt 1249 mm.

Die Länge der ersten Seitenwand 26, die den Lufteinströmabschnitt 17 begrenzt, entlang der Querachse y beträgt 300 mm. Die Länge der zweiten Seitenwand 27, die den Lufteinströmabschnitt 17 begrenzt, entlang der Querachse y beträgt 276 mm. Die Länge der ersten Gehäuseaußenseitenwand 31 und einer zweiten Gehäuseaußenseitenwand 32 entlang der Querachse y beträgt 1166 mm. Die Länge der zweiten Seitenwand 27, die den Lufteinströmabschnitt 17 begrenzt, entlang der Querachse y beträgt 276 mm.

Die erste Gehäuseaußenseitenwand 31 und die erste Seitenwand 26, die den Lufteinströmabschnitt 17 begrenzt, schneiden sich in einer ersten Vorderkante des Gehäuses 13. Die zweite Gehäuseaußenseitenwand 32 und die zweite Seitenwand 26, die den Lufteinströmabschnitt 17 begrenzt, schneiden sich in einer zweiten Vorderkante des Gehäuses 13. Eine zur ersten Vorderkante gegenüberliegende Kante der ersten Seitenwand 26 und eine zur zweiten Vorderkante gegenüberliegende Kante der zweiten Seitenwand 27, die den Lufteinströmabschnitt 17 begrenzen, sind entlang der Längsachse x mit einem Abstand von 380 mm beabstandet voneinander.

Die zweite Gehäuseaußenseitenwand 32 und die zweite Seitenwand 30, die den Luftausströmabschnitt 18 begrenzt, schneiden sich in einer zweiten Hinterkante des Gehäuses 13. In der Querschnittsebene weist ein Rand der Rückseite des Gehäuses 13 einen kreisbogenförmigen Verlauf mit einem Radius auf, der z.B. 500 mm betragen kann. Ein Anteil einer geschlossenen Gehäuserückseitenfläche an der Gesamtheit aus Gehäuserückseitenfläche und Luftausströmfläche des Luftausströmabschnitts 28 kann vorzugsweise höchstens 23% betragen. Auch kann dieser Höchstanteil aus einem Bereich von 20% bis 26% gewählt werden.

Die Seitenwände 26, 27, 29, 30 und die Gehäuseaußenseitenwände 31, 32 können hierbei ungekrümmt ausgebildet sein.

Weiter sind der Lufteinströmabschnitt 17 und der Luftausströmabschnitt 28 in Bezug auf eine Ebene, die von einer zur Hauptströmungsrichtung parallelen Gerade und der Rotationsachse 10 aufgespannt wird, in verschiedenen, durch diese Ebene getrennten Halbräumen angeordnet. Dies kann z.B. bedeuten, dass geometrische Mittelpunkte in diesen verschiedenen Halbräumen angeordnet sind. Im dargestellten Ausführungsbeispiel ist der Lufteinströmabschnitt 17 entlang der der Hauptströmungsrichtung in einer linken und der Luftausströmabschnitt 28 in einer rechten Halbebene angeordnet. Weiter ist die erste Vorderkante und eine erste Hinterkante des Gehäuses 13 in der linken und die weitere Vorderkante sowie die weiteren Hinterkante in der rechten Halbebene angeordnet.

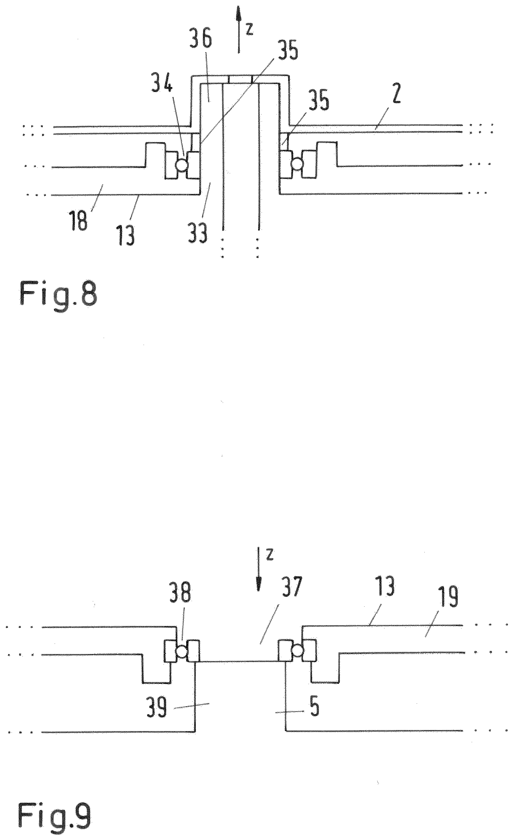

Fig. 8 zeigte eine schematische Darstellung einer Lagerung eines ersten Flügelträgers 2 am Gehäuse 13, insbesondere am Gehäuseboden 18. Der Gehäuseboden 18 weist eine Durchgangsöffnung 33 auf, wobei eine Dicke des Gehäusebodens 18 entlang der Vertikalachse z in dem Abschnitt, der die Durchgangsöffnung 33 umgibt, vergrößert ist. In der Durchgangsöffnung 33 ist ein Kugel- oder Wälzlager 34 angeordnet. Der erste Flügelträger 2 stützt sich über Stützabschnitte 35 auf dem drehbaren Teil des Lagers 34 ab. Weiter dargestellt ist, dass eine Welle 16 des Generators sich durch die Durchgangsöffnung 33 und durch das Lager 34 hindurch erstreckt und an einem generatorabgewandten Ende an dem ersten Flügelträger 2 befestigt ist, insbesondere mit diesem verschraubt ist. Hierbei bildet der erste Flügelträger 2 eine Vertiefung 36 zur Aufnahme der Welle 16 aus.

Fig. 9 zeigte eine schematische Darstellung einer Lagerung eines dritten Flügelträgers 5 am Gehäuse 13, insbesondere am Gehäusedeckel 19. Der Gehäusedeckel 19 weist eine Durchgangsöffnung 37 auf, wobei eine Dicke des Gehäusedeckels 19 entlang der Vertikalachse z in dem Abschnitt, der die Durchgangsöffnung 37 umgibt, vergrößert ist. In der Durchgangsöffnung 37 ist ein Kugel- oder Wälzlager 38 angeordnet. Der dritte Flügelträger 5 stützt sich mit einem zylinderförmigen Vorsprung 39 dem drehbaren Teil des Lagers 38 ab.

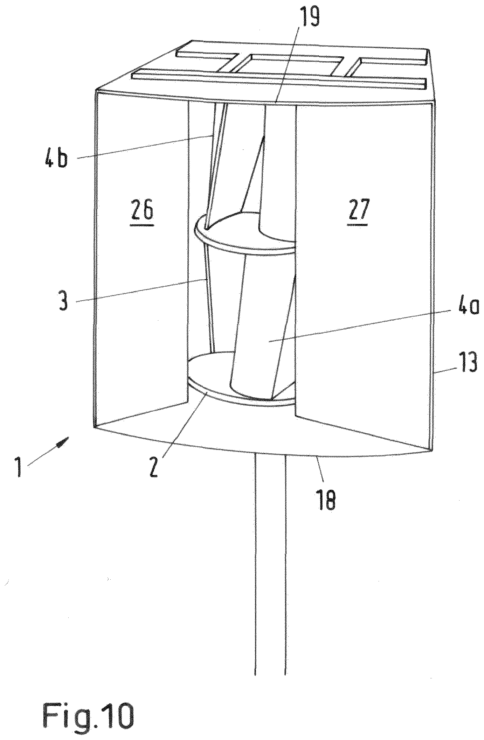

Fig. 10 zeigt eine perspektivische Ansicht des Rotors 1 mit dem Gehäuse 13. Dargestellt sind insbesondere die erste Seitenwand 26, die zweite Seitenwand 27, der Gehäuseboden 18 und die Gehäusedecke 19, die den Lufteinströmabschnitt 17 (siehe Fig. 7) begrenzen. Weiter ist aus Fig. 10 die helixartige Erstreckung/der helixartige Verlauf der Rotorflügel 4a, 4b zwischen den Flügelträgern 2, 3, 5 ersichtlich.

## Patentansprüche

1. Rotor für eine Windkraftanlage, umfassend einen ersten und einen zweiten Flügelträger (2, 3) und eine erste Menge von mindestens zwei Rotorflügeln (4a), wobei die Rotorflügel (4a) der ersten Menge schaufelförmig ausgebildet sind und sich helixartig vom ersten zum zweiten Flügelträger (2, 3) erstrecken, **dadurch gekennzeichnet, dass** der Rotor (1) mindestens einen weiteren Flügelträger (5) und mindestens eine weitere Menge von mindestens zwei Rotorflügeln (4b) umfasst, wobei die Rotorflügel (4b) der weiteren Menge schaufelförmig ausgebildet sind und sich helixartig vom zweiten zum weiteren Flügelträger (3, 5) erstrecken, wobei die Anordnung aus Rotorflügeln (4b) der weiteren Menge winkelversetzt zur Anordnung der Rotorflügel (4a) der ersten Menge angeordnet ist.

2. Rotor nach Anspruch 1, **dadurch gekennzeichnet, dass** die erste Menge und/oder die weitere Menge genau drei Rotorflügel (4a, 4b) umfassen.

3. Rotor nach einem der vorangegangenen Ansprüche, **dadurch gekennzeichnet, dass** der mindestens eine Flügelträger (2, 3, 5) und/oder mindestens ein Rotorflügel (4a, 4b) aus Aluminium oder aus Kunststoff ausgebildet ist/sind.

4. Rotor nach einem der vorangegangenen Ansprüche, **dadurch gekennzeichnet, dass** eine helixartige Referenzlinie eines Rotorflügels (4a, 4b) eine Referenzebene, die senkrecht zu einer Rotationsachse (10) des Rotors (1) orientiert ist, mit einem Winkel (W1) aus einem Winkelbereich von 64° (einschließlich) bis 84° (einschließlich) schneidet.

5. Rotor nach einem der vorangegangenen Ansprüche, **dadurch gekennzeichnet, dass** der Rotor (1) ein Gehäuse (13) umfasst, wobei die Flügelträger (2, 3, 5) und die Rotorflügel (4a, 4b) in einem Innenvolumen des Gehäuses (13) angeordnet sind.

6. Rotor nach Anspruch 5, **dadurch gekennzeichnet, dass** das Gehäuse (13) einen Lufteinströmabschnitt (17) ausbildet, wobei der Lufteinströmabschnitt (17) trichterförmig ausgebildet ist.

7. Rotor nach Anspruch 5 oder 6, **dadurch gekennzeichnet, dass** ein Öffnungswinkel des Lufteinströmabschnitts (17) ein Winkel aus einem Winkelbereich von 66° (einschließlich) bis 86° (einschließlich) ist.

8. Rotor nach Anspruch 5, 6 oder 7, **dadurch gekennzeichnet, dass** ein Winkel (W2) zwischen einer ersten Seitenwand (26) und einer weiteren Seitenwand (27), die den Lufteinströmabschnitt (17) begrenzen und senkrecht zur Querschnittsebene orientiert sind, ein Winkel aus einem Winkelbereich von 66° (einschließlich) bis 86° (einschließlich) ist.

9. Rotor nach einem der Ansprüche 5 bis 8, **dadurch gekennzeichnet, dass** in einer Querschnittsebene, die senkrecht zur Rotationsachse (10) des Rotors (1) orientiert ist, eine erste Seitenwand (26), die den Lufteinströmungsabschnitt (17) begrenzt und senkrecht zur Querschnittsebene orientiert ist, zumindest einen Abschnitt eines ersten Schenkels eines Trapezes bildet und mit einer Basis dieses Trapezes einen Winkel (W2) aus einem Bereich von 70° (einschließlich) bis 84° (einschließlich) einschließt, wobei eine weitere Seitenwand (27), die den Lufteinströmungsabschnitt (17) begrenzt und senkrecht zur Querschnittsebene orientiert ist, zumindest einen Abschnitt eines weiteren Schenkels des Trapezes bildet und mit der Basis dieses Trapezes einen Winkel (W3) aus einem Bereich von 30° (einschließlich) bis 34° (einschließlich) einschließt.

10. Rotor nach einem der Ansprüche 5 bis 9, **dadurch gekennzeichnet, dass** das Gehäuse (13) einen Luftausströmabschnitt (28) ausbildet, wobei der Luftausströmabschnitt (28) trichterförmig ausgebildet ist.

11. Rotor nach einem der Ansprüche 5 bis 10, **dadurch gekennzeichnet, dass** ein Anteil einer Gehäuserückseitenfläche an der Gesamtheit aus Gehäuserückseitenfläche und Luftausströmfläche höchstens zwischen 20% (einschließlich) und 26% (einschließlich) liegt.

12. Rotor nach einem der Ansprüche 5 bis 11, **dadurch gekennzeichnet, dass** der erste Flügelträger (2) zumindest teilweise in einer Ausnehmung im Bereich eines Gehäusebodens (18) angeordnet ist und/oder dass der weitere Flügelträger (5) zumindest teilweise in einer Ausnehmung im Bereich eines Gehäusedeckels (19) angeordnet ist.

13. Rotor nach einem der Ansprüche 5 bis 12, **dadurch gekennzeichnet, dass** der erste Flügelträger (2) eine Ausnehmung (36) zur Aufnahme und Befestigung einer Generatorwelle (16) aufweist oder ausbildet und/oder ein Gehäuseboden (18) eine verstärkte Durchgangsöffnung (33) zur Aufnahme der Generatorwelle (16) aufweist oder ausbildet.

14. Rotor nach einem der Ansprüche 5 bis 13, **dadurch gekennzeichnet, dass** der weitere Flügelträger (5) ein Lagerelement zur Lagerung an einem Gehäusedeckel (19) aufweist oder ausbildet und/oder der Gehäusedeckel (19) eine verstärkte Durchgangsöffnung (37) zur Aufnahme des Lagerelements aufweist oder ausbildet.

15. Verfahren zum Betrieb eines Rotors nach einem der Ansprüche 1 bis 14, **dadurch gekennzeichnet, dass** ein Generator mechanisch mit dem Rotor (1) verbunden ist und der Rotor (1) mit Luft angeströmt wird.

## Claims

1. Rotor for a wind turbine, comprising a first and a second blade carrier (2, 3) and a first set of at least two rotor blades (4a), wherein the rotor blades (4a) of the first set are blade-shaped and extend helically from the first to the second blade carrier (2, 3), **characterised in that** the rotor (1) comprises at least one further blade carrier (5) and at least one further set of at least two rotor blades (4b), wherein the rotor blades (4b) of the further set are blade-shaped and extend helically from the second to the further blade carrier (3, 5), the arrangement of rotor blades (4b) of the further set being arranged at an angle offset to the arrangement of the rotor blades (4a) of the first set.

2. Rotor according to claim 1, **characterised in that** the first set and/or the further set comprise exactly three rotor blades (4a, 4b).

3. Rotor according to one of the preceding claims, **characterised in that** the at least one blade carrier (2, 3, 5) and/or at least one rotor blade (4a, 4b) is/are made of aluminium or plastic.

4. Rotor according to one of the preceding claims, **characterised in that** a helical reference line of a rotor blade (4a, 4b) intersects a reference plane, which is oriented perpendicular to an axis of rotation (10) of the rotor (1), with an angle (W1) from an angular range of 64° (inclusive) to 84° (inclusive).

5. Rotor according to one of the preceding claims, **characterised in that** the rotor (1) comprises a housing (13), wherein the blade carriers (2, 3, 5) and the rotor blades (4a, 4b) are arranged in an inner volume of the housing (13).

6. Rotor according to claim 5, **characterised in that** the housing (13) forms an air inflow section (17), wherein the air inflow section (17) is funnel-shaped.

7. Rotor according to claim 5 or 6, **characterised in that** an opening angle of the air inflow section (17) is an angle from an angle range of 66° (inclusive) to 86° (inclusive).

8. Rotor according to claim 5, 6 or 7, **characterised in that** an angle (W2) between a first side wall (26) and a further side wall (27), which delimit the air inflow section (17) and are oriented perpendicular to the cross-sectional plane, is an angle from an angular range of 66° (inclusive) to 86° (inclusive).

9. Rotor according to one of claims 5 to 8, **characterised in that**, in a cross-sectional plane which is oriented perpendicularly to the axis of rotation (10) of the rotor (1), a first side wall (26), which delimits the air inflow section (17) and is oriented perpendicularly to the cross-sectional plane, forms at least a section of a first leg of a trapezoid and encloses with a base of this trapezoid an angle (W2) from a range of 70° (inclusive) to 84° (inclusive), wherein a further side wall (27), which delimits the air inflow section (17) and is orientated perpendicular to the cross-sectional plane, forms at least a section of a further leg of the trapezoid and encloses with the base of this trapezoid an angle (W3) from a range of 30° (inclusive) to 34° (inclusive).

10. Rotor according to one of claims 5 to 9, **characterised in that** the housing (13) forms an air outflow section (28), wherein the air outflow section (28) is funnel-shaped.

11. Rotor according to one of claims 5 to 10, **characterised in that** a proportion of a housing rear surface in the total of housing rear surface and air discharge surface is at most between 20% (inclusive) and 26% (inclusive).

12. Rotor according to one of claims 5 to 11, **characterised in that** the first blade carrier (2) is arranged at least partially in a recess in the region of a housing base (18) and/or in that the further blade carrier (5) is arranged at least partially in a recess in the region of a housing cover (19).

13. Rotor according to one of claims 5 to 12, **characterised in that** the first balde carrier (2) has a recess (36) for receiving and fastening a generator shaft (16) and/or a housing base (18) has or forms a reinforced through-opening (33) for receiving the generator shaft (16).

14. Rotor according to one of claims 5 to 13, **characterised in that** the further blade carrier (5) has or forms a bearing element for mounting on a housing cover (19) and/or the housing cover (19) has a reinforced through-opening (37) for receiving the bearing element (37).

15. Method for operating a rotor according to one of claims 1 to 14, **characterised in that** a generator is mechanically connected to the rotor (1) and the rotor (1) is supplied with air.

## Revendications

1. Rotor pour une éolienne, comprenant un premier et un deuxième support de pale (2, 3) et un premier ensemble d'au moins deux pales de rotor (4a), les pales de rotor (4a) de la première quantité étant réalisées en forme de pelle et s'étendant en hélice du premier au deuxième support de pale (2, 3), **caractérisé en ce que** le rotor (1) comprend au moins un autre support de pale (5) et au moins un autre ensemble d'au moins deux pales de rotor (4b), les pales de rotor (4b) de l'autre ensemble étant réalisées en forme de pelle et s'étendant en hélice du deuxième support de pale à l'autre support de pale (3, 5), l'agencement des pales de rotor (4b) de l'autre ensemble étant décalé angulairement par rapport à l'agencement des pales de rotor (4a) du premier ensemble.

2. Rotor selon la revendication 1, **caractérisé en ce que** le premier ensemble et/ou l'autre ensemble comprennent exactement trois pales de rotor (4a, 4b).

3. Rotor selon l'une des revendications précédentes, **caractérisé en ce que** l'au moins un support de pale (2, 3, 5) et/ou au moins une pale de rotor (4a, 4b) est/sont réalisé(s) en aluminium ou en matière plastique.

4. Rotor selon l'une quelconque des revendications précédentes, **caractérisé en ce qu'**une ligne de référence hélicoïdale d'une pale de rotor (4a, 4b) coupe un plan de référence orienté perpendiculairement à un axe de rotation (10) du rotor (1) avec un angle (W1) compris dans une plage angulaire de 64° (inclus) à 84° (inclus).

5. Rotor selon l'une quelconque des revendications précédentes, **caractérisé en ce que** le rotor (1) comprend un boîtier (13), les supports de pales (2, 3, 5) et les pales de rotor (4a, 4b) étant disposés dans un volume intérieur du boîtier (13).

6. Rotor selon la revendication 5, **caractérisé en ce que** le boîtier (13) forme une section d'entrée d'air (17), la section d'entrée d'air (17) ayant une forme d'entonnoir.

7. Rotor selon la revendication 5 ou 6, **caractérisé en ce qu'**un angle d'ouverture de la section d'entrée d'air (17) est un angle compris dans une plage angulaire de 66° (inclus) à 86° (inclus).

8. Rotor selon la revendication 5, 6 ou 7, **caractérisé en ce qu'**un angle (W2) entre une première paroi latérale (26) et une autre paroi latérale (27) qui délimitent la section d'admission d'air (17) et sont orientées perpendiculairement au plan de la section transversale est un angle compris dans une plage angulaire de 66° (inclus) à 86° (inclus).

9. Rotor selon l'une quelconque des revendications 5 à 8, **caractérisé en ce que**, dans un plan de section transversale orienté perpendiculairement à l'axe de rotation (10) du rotor (1), une première paroi latérale (26) délimitant la portion d'entrée d'air (17) et orientée perpendiculairement au plan de section transversale forme au moins une portion d'un premier côté d'un trapèze et forme avec une base de ce trapèze un angle (W2) compris dans un domaine allant de 70° (inclus) à 84° (inclus), une autre paroi latérale (27), délimitant la portion d'entrée d'air (17) et orientée perpendiculairement au plan de la section transversal forme au moins une portion d'un autre côté du trapèze et forme avec la base de ce trapèze un angle (W3) compris dans une plage allant de 30° (inclus) à 34° (inclus).

10. Rotor selon l'une quelconque des revendications 5 à 9, **caractérisé en ce que** le boîtier (13) forme une section de sortie d'air (28), ladite section de sortie d'air (28) ayant une forme d'entonnoir.

11. Rotor selon l'une des revendications 5 à 10, **caractérisé en ce qu'**une proportion d'une surface arrière du boîtier par rapport à l'ensemble de la surface arrière du boîtier et de la surface de sortie d'air est au plus comprise entre 20% (inclus) et 26% (inclus).

12. Rotor selon l'une des revendications 5 à 11, **caractérisé en ce que** le premier support de pale (2) est disposé au moins partiellement dans un évidement au niveau d'un fond de boîtier (18) et/ou **en ce que** l'autre support de pale (5) est disposé au moins partiellement dans un évidement au niveau d'un couvercle de boîtier (19).

13. Rotor selon l'une des revendications 5 à 12, **caractérisé en ce que** le premier support de pale (2) présente un évidement (36) destiné à recevoir et à fixer une l'arbre de générateur (16) et/ou un fond de boîtier (18) présente ou forme une ouverture de passage renforcée (33) pour recevoir l'arbre de générateur (16).

14. Rotor selon l'une des revendications 5 à 13, **caractérisé en ce que** l'autre support de pale (5) présente ou forme un élément de palier pour le montage sur un couvercle de boîtier (19) et/ou le couvercle de boîtier (19) présente une ouverture de passage renforcée (37) pour recevoir l'élément de palier.

15. Procédé de fonctionnement d'un rotor selon l'une des revendications 1 à 14, **caractérisé en ce qu'**un générateur est relié mécaniquement au rotor (1) et **en ce que** le rotor (1) est alimenté en air.
